# EUROPEAN PATENT APPLICATION

(11) **EP 0 924 631 A2**
(43) Date of publication of application: **23.06.1999**
(21) Application number: 98309449.1
(22) Date of filing: 18.11.1998
(51) Int. Cl.: G06F 17/60

(54) **Method and system for performing work flow control in accordance with an input state of data**

(30) Priority: 21.11.1997 JP 32121397
(71) Applicant: HITACHI, LTD., Chiyoda-ku, Tokyo (JP)
(72) Inventor: Mori, Toshihiko, Kawasaki-shi (JP); Soga, Nobuko, Kawasaki-shi (JP); Hosoda, Naofumi, Kawasaki-shi (JP); Soga, Shuji, Kawasaki-shi (JP); Yakabe, Taro, Kawasaki-shi (JP)
(74) Representative: Hackney, Nigel John

(57) **Abstract**

In order that a work flow control system may carry out sending of data which becomes necessary when carrying out the work flow control with respect to the work processing in an enterprise and the dealings between enterprises, a role agent unit (122) detects completion of the processing in a user application (111) and refers to a role rule definition DB (121) to carry out the work flow control in a section. In addition, a business agent unit (123) also detects the completion of the processing in the user application (111) and refers to a business rule definition DB (118) to carry out the work flow control extending over sections, and if a section in charge of an item to be processed next time is another enterprise, makes a request to an access agent unit (127) for the data sending. Then, the access agent unit (127) refers to an access rule definition DB (126) to issue an action notice to the enterprise as the destination.

## Description

The present invention relates in general to a work flow control method utilizing an electronic computer and a computer system for carrying out the work flow control, and more particularly to a method and a system for carrying out the work flow control with respect to dealing business between enterprises in addition to the work flow control with respect to work processings in an enterprise.

In general, the work processings in an enterprise are executed through plural times of work states each constituted by a sequence of a plurality of work steps in many cases. Data is successively delivered through vouchers, documents and the like from a certain work step to a next work step. In such a way, a series of work steps are carried out. In a work flow system utilizing an electronic computer, the information which is managed in units of vouchers and documents is stored in a memory of the electronic computer and is delivered to the person in charge of the next work by the data transmission through a network. For example, an article of "NIKKEI INFORMATION STRATEGY" published by Nikkei BP Company, July, 1994, pp. 66 to 76 discloses this sort of work flow system.

On the other hand, with respect to the dealings between enterprises, the vouchers and the documents which have been obtained as a result of carrying out parts of the work processings by the respective enterprises are exchanged between the enterprises having dealings with each other. For this reason, the dealings between enterprises can be regarded as the dealings in which a work processing in an enterprise extendedly continues from a certain enterprise to another enterprise. As one of the systems by which such dealings between enterprises are carried out by utilizing an electronic computer, there is well known a system for carrying out dealings between enterprises by an EDI (Electronic Data Interchange). This system is such that the two enterprises which will have dealing with each other make previously a contract with each other, and then the data is exchanged in the form of vouchers and documents therebetween on the basis of the format, the data layout and other rules which have been determined therein. In other words, the matters corresponding to the work processing rules which are determined in an enterprise are determined every enterprise with which the enterprise of interest has dealings, and the deal is made on the basis of the rules. For example, an article of "INTRODUCTION TO EDI" by Hiroshi Kitazawa, Soft Research Center, 1991 discloses this sort of EDI technology.

Since in the system for carrying out the dealings between enterprises by utilizing the conventional EDI, the dealing rules are determined every enterprise, the dealing method must be changed every party of the dealing in accordance with the dealing rules. Therefore, this results in that the situation will occur in which the processing method must be changed in accordance with the dealing contents. The ordering processing is given as a typical example. In the enterprise which has sent an order, after completion of sending an order, the transition is made for the work state from the inspection of arrived articles to counting up of account payable. In the work state in the dealings between enterprises, however, after completion of sending an order, the enterprise which has received the order thus sent thereto will carry out the processing for the contract award. In addition, the enterprise to which the order is to be sent is not necessarily the same at all times depending on the ordering contents thereof. In accordance with the ordering contents, the enterprise to which the data is to be sent and the sending method may be greatly changed in some cases. As described above, however, in the system for carrying out the dealings between enterprises, the dealing rules are changed in accordance with an enterprise with which a deal is made, and hence it is difficult for the different enterprises to execute the processing in accordance with the same processing procedure. As a result, it is very difficult to realize the system wherein a data transmission method and an enterprise to which data is to be sent are changed as occasion may demand in accordance with the ordering contents. This is a problem.

In the light of the foregoing, the present invention was made to mitigate the above-mentioned problems associated with the prior art, and it is preferably an object of the present invention to provide a work flow control method and a system for use in the same in which irrespective of whether the processing of interest is a work processing in an enterprise or dealings between enterprises, as a rule, sending of data which is necessary between sections or enterprises is carried out on the work flow control system side to prevent a user application and the person in charge of the work processing from being aware of such data sending.

A work flow control method according to the present invention may provide including the steps of: judging, when detecting completion of a work step relating to item data in a work processing, whether or not the person in charge of a next processing is in a state of an item to be processed on the basis of work flow rules in a section used to define the person in charge of an item to be processed next time in a work flow sequence within a section in accordance with a data input state of the item data of interest, and issuing, if the person in charge of the next processing has reached the state of the item to be processed, an action notice to the person in charge of the next processing; judging, when detecting completion of the work processing relating to the item data of interest, whether or not the next section is in a state of an item to be processed on the basis of work flow rules between sections used to define the section in charge of the processing to be processed next time in a work flow sequence extending over the sections in accordance with the data input state of the item data of interest, and issuing, if the next section has reached the state of the item to be processed, an action notice to the next section; and carrying out, in response to the action notice issued to the next section, the next work step on the basis of the work role rules in a section.

In addition, a work flow control system according to the present invention may provide including: a first agent unit for controlling work flow in a section; a second agent unit for controlling work flow between sections; and a third agent unit for carrying out data transfer between the second agent unit and another second agent unit.

In this connection, the first agent unit includes: a unit for judging, when detecting completion of a work step relating to item data in a work processing, whether or not the person in charge of a next processing is in a state of an item to be processed on the basis of work flow rules in a section used to define the person in charge of an item to be processed next time in a work flow sequence within a section in accordance with a data input state of the item data of interest, and for issuing, if the person in charge of the next processing has reached the state of the item to be processed, an action notice to the person in charge of the next processing; and a unit for carrying out, in response to the action notice issued to a next section, the work flow control in a section on the basis of the work flow rules in a section.

In addition, the second agent unit includes: a unit for judging, when detecting completion of the work step relating to the item data in the work processing, whether or not the next section is in a state of an item to be processed on the basis of the work flow rules between sections used to define the section in charge of the processing to be processed next time in the work flow sequence extending over sections in accordance with the data input state of the item data of interest and for judging, when the next section has reached the state of the item to be processed, whether the next section belongs to the section under the management made by the second agent unit of interest or the section out of the management thereof, and for issuing, if the next section is judged to belong to the section under the management thereof, an action notice to the first agent unit under the management, while making, if the next section is judged to belong to the section out of the management thereof, a request to the third agent unit for the data sending; and a unit for issuing, in response to an action notice issued from the third agent unit, an action notice to the first agent unit as the destination.

The third agent unit includes a unit for determining, in response to the request made thereto for the data sending from the second agent unit, the second agent unit for managing the next section, and for issuing an action notice to the second agent unit thus determined.

The above-mentioned next section is the functional section which is represented by a general term, and the second agent unit has only to judge whether that functional section is either the section under the management thereof or the functional section out of the management thereof. In addition, when receiving the data relating to the functional section as the destination together with the action notice from the third agent unit, since that functional section is the functional section under the management, the second agent unit determines the first agent unit as the destination by referring to a table. In addition, the third agent unit has only to receive the data relating to the functional section as the destination to judge an identifier relating to the second agent unit as the destination by referring to the table. Further, if as the table to which the third agent unit refers, there is provided the table in which the corresponding destinations are set with the contents of the item data as the conditions, then the third agent unit can determine the destination by comparing the contents of the item data with the conditions of the item data on the table. In addition, as for the table to which the second agent unit refers as well, similarly, if there is provided the table in which the corresponding destinations are set with the contents of the item data as the conditions, then the second agent unit can determine the destination by comparing the contents of the item data with the conditions of the item data on the table.

As described above, the work flow control system judges automatically the section or the enterprise to which the data is to be sent on the basis of the contents of the item data to carry out the data sending. Therefore, even if the user application or the person in charge of the work processing is not aware of the data sending, the data sending is carried out between sections in an enterprise or between enterprises, and hence the work flow extending over a plurality of enterprises is accurately, efficiently controlled. In this connection, when the data sending method is changed, the work flow rules which are managed by the second agent unit has only to be changed. Also, when the section or the enterprise to which the data is to be sent is changed, the contents of the table to which when determining the section or the enterprise to which the data is to be sent, the second agent unit and the third agent unit make reference have only to be changed.

According to the present invention, a work flow control system determines a data sending method and a section or an enterprise to which data is to be sent (addressee) in accordance with the contents of dealings and also realize the highly reliable and efficient work flow control extending over a plurality of enterprises. In addition, the work flow control system determines a communication method in accordance with a kind of network lying between enterprises and also carries out compression and encipherment of data, and hence the user application does not need to be aware of such a communication method, data processing when transmitting the data, and ensuring of the security at all.

### BRIEF DESCRIPTION OF THE DRAWINGS

The above and other objects as well as advantages of the present invention will become clear by the following description of the preferred embodiments of the present invention with reference to the accompanying drawings, wherein:
Fig. 1 is a view showing schematically an example of a system configuration;
Fig. 2 is a block diagram showing a configuration of constituent elements of a system according to an embodiment;
Fig. 3 is a view showing an example of one item data stored in a work database 112;
Fig. 4 is a view showing a data example of work flow rules 119 within a section;
Fig. 5 is a view showing a data example of a role table 120;
Fig. 6 is an example of a flow chart showing the processing flow in a role agent unit 122 when receiving an instruction to issue an A/N from a business agent unit 123;
Fig. 7 is an example of a flow chart showing the processing flow in the role agent unit 122 when receiving a notice indicating completion of processings from a user application 111;
Fig. 8 is a view showing a data example of an item state transition reference table 114;
Fig. 9 is a view showing a data example of an executable action table 114;
Fig. 10 is a view showing a data example of a logical role node definition table 115;
Fig. 11 is a view showing a data example of a charge business agent table 116;
Fig. 12 is a view showing a data example of a post definition table 117;
Fig. 13 is an example of a flow chart showing the processing flow in the business agent unit 123 when receiving a notice indicating completion of processings from the user application 111;
Fig. 14 is an example of a flow chart showing the processing flow in the business agent unit 123 when receiving an A/N issue request from another business agent unit 123;
Fig. 15 is a view showing a data example of a table 124 for specifying a section or an enterprise to which data is to be sent;
Fig. 16 is a view showing a data example of an access rule definition table 125;
Fig. 17 is an example of a flow chart showing the processing flow in an access agent unit 127; and
Fig. 18 is an example of a flow chart showing the processing flow in a network switching unit 128.

### DESCRIPTION OF THE PREFERRED EMBODIMENTS

The preferred embodiments of the present invention will hereinafter be described in detail with reference to the accompanying drawings.

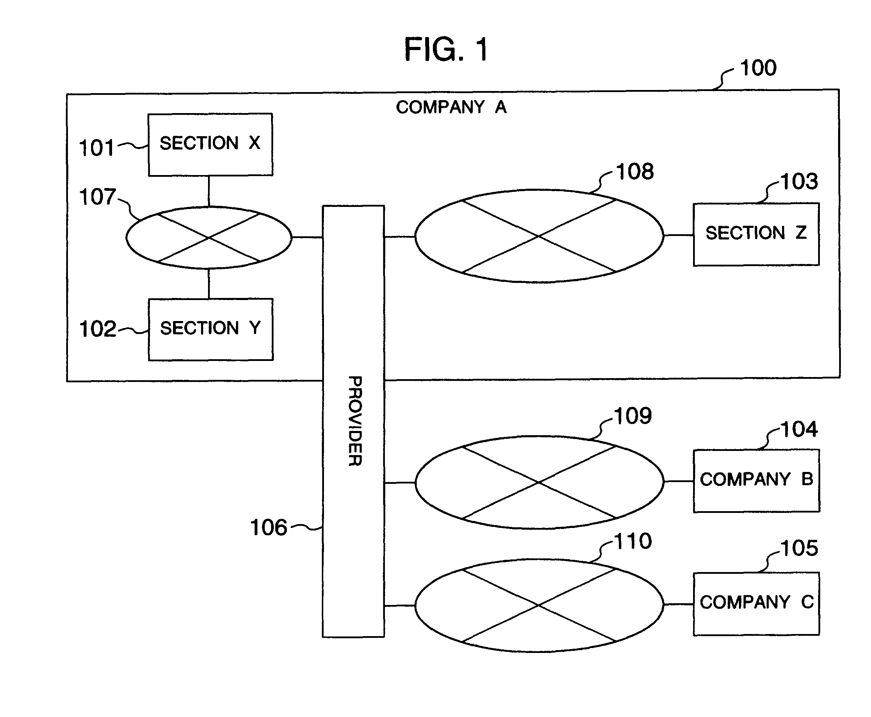

Fig. 1 is a view showing schematically an example of a system configuration. In Fig. 1, a company A 100, a company B 104 and a company C 105 are the enterprises which take part in the dealings between enterprises, and a provider 106 is an entrepreneur which does not belong to any of enterprises. The company A 100 is constituted by a section X 101, a section Y 102 and a section Z 103. In this connection, it is assumed that the section X 101, the section Y 102 and the section Z 103, the company B 104 and the company C 105, and the provider 106 represent the computer systems which are managed by the sections, the enterprises and the entrepreneur, respectively. The section X 101 and the section Y 102 which are located in the same seat of the company A 100 are connected to each other through a LAN (Local Area Network) 107, and also are connected to the section Z 103 thereof which is located in the seat different from that of the section X 101 and the section Y 102 through both of the LAN 107 and a network 108. The section X 101 and the section Y 102 of the company A 100 are connected to the company B 104 through both of the provider 106 and a network 109. Also, the section X 101 and the section Y102 of the company A 100 are connected to the company C 105 through both of the provider 106 and a network 110. Each of the networks 108, 109 and 110 is a network, such as a dedicated line, a WAN (Wide Area Network) or an internet, other than an LAN. The communication between the section X 101 and the section Y 102 is carried out without through the provider 106, however, the communication between the section X 101 and the section Y 102, and the section Z 103, the company B 104 or the company C 105 is carried out through the provider 106.

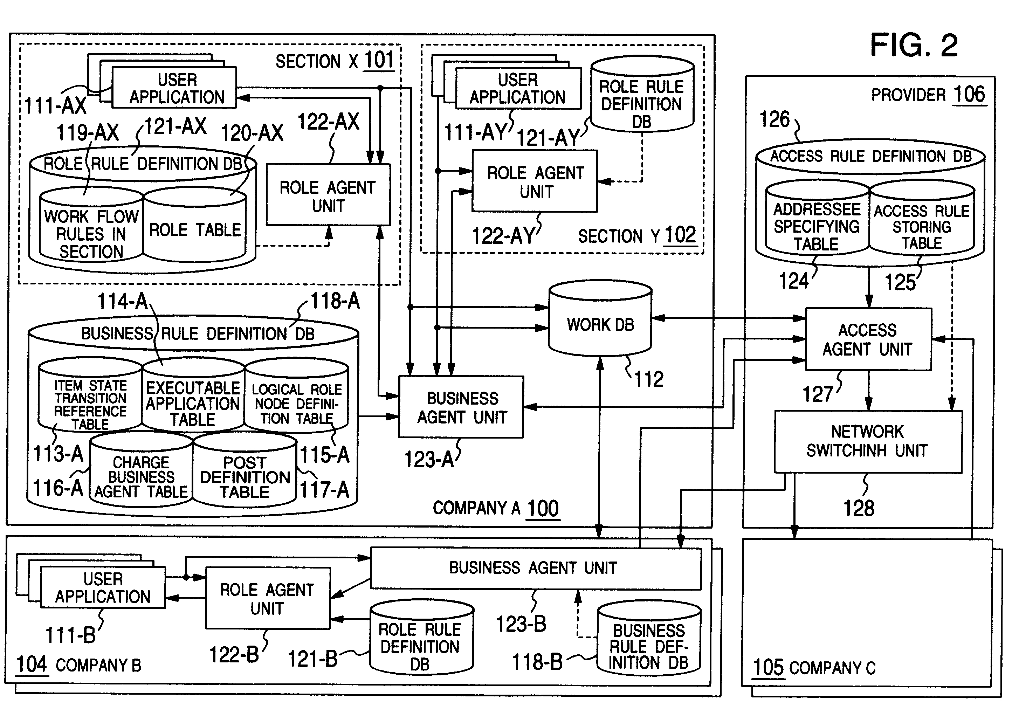

Fig. 2 is a block diagram showing a configuration of the system shown in Fig. 1 which is unfolded here. In the section X 101 of the company A 100, there is installed a computer system including at least one computer storing therein a user application 111-AX, a role agent unit 122-AX and a role rule definition database (DB) 121-AX.

In addition, in the section Y 102 of the company A 100, similarly, there is installed a computer system having at least one computer storing therein a user application 111-AY, a role agent unit 122-AY and a role rule definition database (DB) 121-AY.

Also, as a computer system which the section X 101 and the section Y 102 of the company A 100 have in common, there is installed a computer system having at least one computer storing therein a business agent unit 123-A, a business rule definition DB 118-A and a work database (DB) 112.

A computer system of the company B 104 stores therein a user application 111-B, a role agent unit 122-B, a role rule definition DB 121-B, a business agent unit 123-B and a business rule definition DB 118-B, and also the company B 104 and the company A 100 have the work DB 112 in common.

A computer system (not shown) of the section Z 103 of the company A 100 also stores therein, similarly to the company B 104, a user application 111-AZ, a role agent unit 122-AZ, a role rule definition DB 121-AZ, a business agent unit 123-AZ and a business rule definition DB 118-AZ, and also has the work DB 112 in common with the section X 101, the section Y 102 and the company B 104.

A computer system of the company C 105 stores therein a user application 111-C, a role agent unit 122-C, a role rule definition DB 121-C, a business agent unit 123-C and a business rule definition DB 118-C, but does not have the work DB 112 of the company A 100 in common with the company A 100 and hence can not access to the work DB 112 at all.

In addition, a computer system of the provider 106 stored therein an access rule definition DB 126, an access agent unit 127 and a network switching unit 128.

Incidentally, the reference numerals each having no suffix may name generally the constituent elements indicated by the respective reference numerals having suffixes in some cases.

The work DB 112 is accessed thereto by the accessable user application 111 and the results of the work processing are stored therein in the form of data every item. The role rule definition DB 121 is constituted by the work flow rules 119 within a section and the role table 120. The work flow rules 119 within a section define the charge of the work which is represented by the sequence and the role of the work flow within a section.

The role table 120 defines the correspondence between the role and the actual person in charge of the processing of interest. When having received an action notice (A/N) for an instruction to proceed to a next item state from the business agent unit 123, the role agent unit 122 determines the person in charge of a next work processing by referring to the work flow rules 119 within a section and the role table 120 and then issues an A/N to the user application 111 of the person in charge of the next work processing.

In addition, when having received a notice indicating completion of processing from the user application 111, the role agent unit 122 judges whether or not the item state should be made proceed to the next state by referring to the work flow rules 119 within a section, and if it is judged that the item state should be made to proceed to the next state, issues an A/N to the user application 111 of the person in charge of the next processing by referring to the role table 120. That is, the role agent unit 122 is provided in each of the section X 100, the section Y 102 and the section Z 103 to carry out the work flow control in the associated section.

The business rule definition DB 118 is provided in each of the company A 100, the company B 104 and the company C 105 and also is constituted by an item state transition reference table 113, an executable action table 114, a logical role node definition table 115, a charge business agent table 116 and a post definition table 117. In this connection, the item state transition reference table 113 defines the item state transition rules used to control the sequence in which the work flow extends over the sections including other companies. The executable action table 114 defines the actions which should be adopted when making the transition to the item states, and the logical role node definition table 115 defines the logical role node used to execute the action of interest. The logical role node is the name of the section, i.e., the section name which is represented by a general term meaning the functional section. The charge business agent table 116 defines whether the logical role node belongs to that under the management of the business agent unit 123 of interest or that out of the management thereof (i.e., that under the management of the business agent unit other than the business agent unit of interest). The post definition table 117 defines the name of the actual charge post in correspondence to the logical role node under the management of the business agent unit of interest.

The business agent unit 123 judges, when having received a notice indicating completion of processing from the user application 111, whether or not the transition has been made for the item state of the item to be sequence-controlled by referring to the item state transition reference table 113. If it is judged that the transition has been made for the item state, then the business agent unit 123 determines both of the action, which is to be executed next time, and the logical role node thereof by referring to both of the executable action table 114 and the logical role node definition table 115, and then judges whether or not the logical role node of interest corresponds to the section under the management of the business agent unit 123 by referring to the charge business agent table 116. If it is judged that the logical role node of interest corresponds to the section under the management of the business agent unit 123, then the unit 123 obtains the name of the post which will carry out actually the work by referring to the post definition table 117 and then sends an A/N to the role agent unit 122 which manages the post of interest.

On the other hand, if it is judged that the logical role node of interest corresponds to the section out of the management thereof, then the business agent unit 123 makes a request to the access agent unit 127 for the data sending. In addition, when having received a request to issue an A/N from another business agent unit 123 through the access agent unit 127, the business agent unit 123 obtains the actual post name corresponding to the specified logical role node by referring to the post definition table 117 and then sends an A/N to the role agent unit 122 which manages the post of interest. As described above, the business agent unit 123 can activate the role agent unit 122 under the management thereof, and also can carry out the work flow control on the basis of the functional section name called the logical role node with respect to the work flow extending over other sections or enterprises, e.g., from the section X 101 and the section Y 102 to the section Z 103 of the company A 100 or from the section X 101 and the section Y 102 of the company A 100 to the company B 104.

The access rule definition DB 126 is constituted by an addressee specifying table 124 and an access rule storing table 125. The addressee specifying table 124 defines a physical role node corresponding to a logical role node. In this connection, by the physical role node handled here is meant an identifier of a business or an enterprise having the business role agent unit 123 such as the section Z 103, the company B 104, and the company C 105. The access rule storing table 125 defines the communication protocol, the security method and the like when transmitting data from the physical role node of interest to another physical role node.

The access agent unit 127 receives the request to send the data from the business agent unit 123 and then determines a physical role node of the section or the enterprise to which the data is to be sent (addressee) corresponding to the logical role node which has been specified by referring to the addressee specifying table 124. In addition, the access agent unit 127 updates, when having received the request made thereto for the data sending to the work DB 112 from the physical role node which can not access to the work DB 112, the contents of the work DB 112 using the data item value of the item thus received. In addition, if the section or the enterprise to which the data is to be sent is the physical role node which can not access to the work DB 112, then the access agent unit 127 attaches thereto the data item value of the item which has been obtained from the work DB 112.

The network switching unit 128 receives the data sending request from the access agent unit 127 and then sends the data to the physical role node which has been specified through the network after having processed the data by referring to the access role storing table 125. As described above, the access agent unit 127 converts the logical role node to the corresponding physical role node and carries out the mediation of the data transmission which is carried out from the physical role node to another physical role node.

Each of the company B 104 and the company C 105 has the dedicated provider 106 or the provider 106 which each of the company B 104 and the company C 105, and other companies have in common. The provider 106 on the side of the company B 104 and the company C 105 receives the data sent from the company A 100 at the access agent unit 127, and then restores the data and decodes the cipher data at the network switching unit 128 to deliver the resultant data to the company B 104 and the company C 105, respectively. The data which will be sent from the company B 104 or the company C 105 to the company A 100 is delivered to the business agent unit 123 which manages the section X 101 and the section Y 102 of the company A 100 by tracing the path extending from the access agent unit 127 stored in the provider 106, the network switching unit 128 and the network on the side of the company B 104 or the company C 105 to the access agent unit 127 and the network switching unit 128 on the side of the company A 100. In this connection, it is assumed that the security between the section X 101 and the section Y 102 of the company A 100 and the provider 106 on the basis of the company A 100, and the security between the company B 104 or the company C 105, and the provider 106 thereof are ensured, and also when carrying out the data transfer, no data is processed.

The user application 111 is the program stored in a computer such as a client. Each of the role agent unit 122, the business agent unit 123, the access agent unit 127 and the network switching unit 128 is the program stored in a computer such as a server. All of the role rule definition DB 121, the business rule definition DB 118, the work DB 112 and the access rule definition DB 126 are stored in a memory connected to a computer such as a server. The programs of both of the business agent unit 123 and the access agent unit 127 can be stored in a storage medium and then be read out from a main memory of a computer through a driver connected to the computer or the program transmission via the network to be executed.

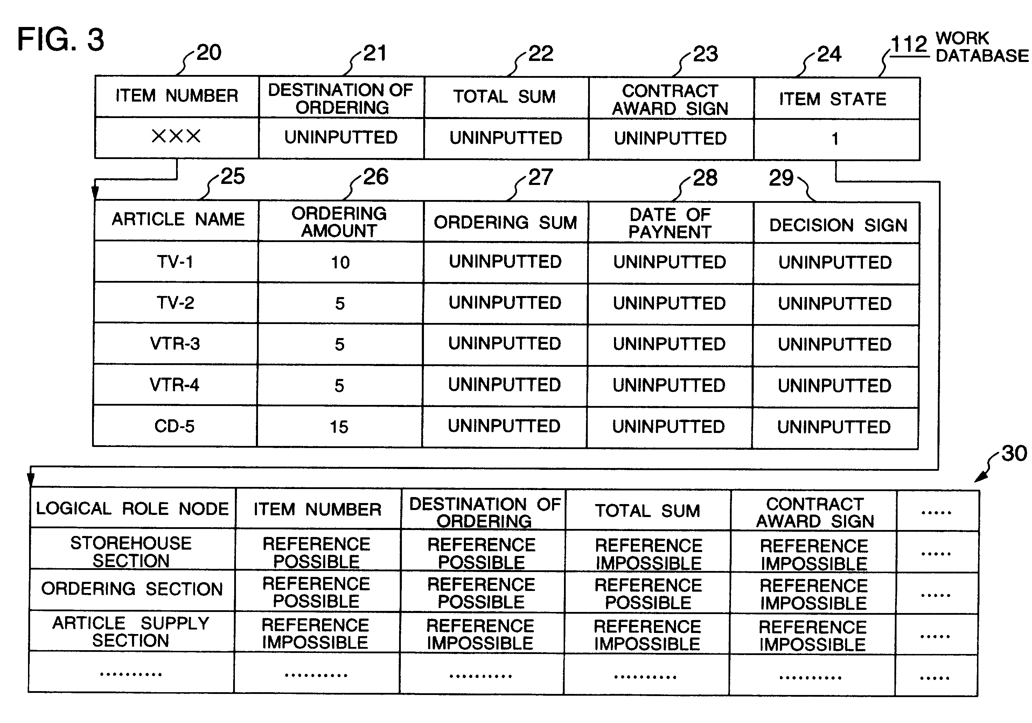

Fig. 3 is a view showing an example of one item data which is stored in the work DB 112. One item data includes an item number 20, a destination of ordering 21, a total sum of money 22, a contract award sign 23 and an item state 24. In addition, for every article ordered for one item, there are provided the data items of an article name 25, an ordering amount 26, an ordering sum of money 27, the date of payment 28 and a decision sign 29. In this connection, the total sum of money 22 is obtained by summing up the ordering sum of money 27 with respect to all of articles of the item of interest, and hence is the data item which is automatically calculated. The item state 24 exhibits the current status in the sequence of the work flow with respect to the item of interest. The contract award sign 23 is the sign indicating that the contract award has been decided. The decision sign 29 is the sign indicating that the manager has made the decision. In addition, the data item which is described as "uninputted" in Fig. 3 exhibits that the data is not yet inputted. The work DB 112 has a table 30 which exhibits, in correspondence to the states shown in the item state 24, whether or not in the state of interest, the logical role nodes are accessable to the data items ranging from the item data 20 to the decision sign 29. In this connection, "reference possible" exhibits that only the reference to the data is possible, "reference impossible" exhibits that the reference is not allowed, and "update possible" exhibits that either the data input or the data update is possible.

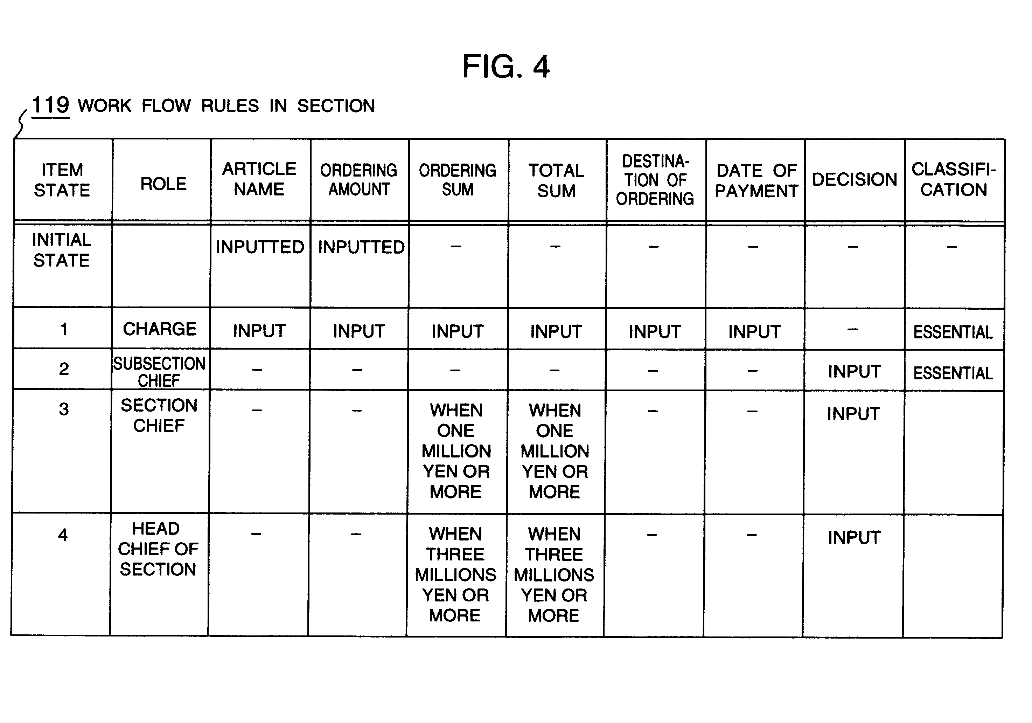

Fig. 4 is a view showing a data example of the work flow rules 119 in a section and also shows the role for inputting data in accordance with the item states, and the data items to be inputted. In this connection, the names of articles, the ordering amount, the ordering sum of money, the destination of ordering and the date of payment correspond to the data items which the item shown in Fig. 3 has. When having inputted the data relating to the names of articles and the ordering amount, the processing proceeds to an item state 1. When the person in charge of the processing (a plurality of persons may also be available) inputs the data relating to the names of articles, the ordering amount, the ordering sum of money, the destination of ordering and the date of payment, and then the total sum of money is calculated by the computer to be automatically inputted, the processing proceeds to an item state 2. When inputting the data relating to the decision made by a subsection chief, the processing proceeds to an item state 3 if the ordering sum of money or the total sum of money is equal to or larger than one million yen, and otherwise, the work flow is completed. When inputting the data relating to the decision made by a section chief in the status of the item state 3, the processing proceeds to an item state 4 if the ordering sum of money or the total sum of money is equal to or larger than three millions yen, and otherwise, the work flow is completed. In this connection, in this table, "input" exhibits that the data input is required in the item state of interest, and a mark "-" exhibits that there is no data input. In addition, "essential" in the column of a classification exhibits that the processing must path through the item state of interest in the sequence of the work flow, and otherwise, the sequence may be executed depending on the conditions. The above-mentioned processing is executed by the role agent unit 122.

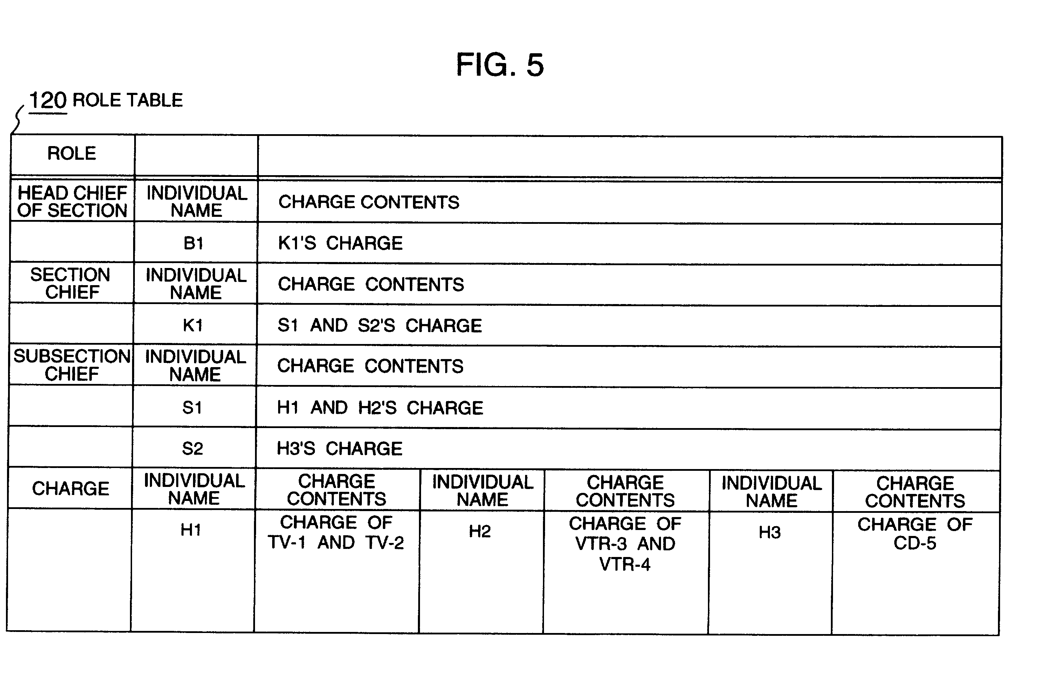

Fig. 5 is a view showing a data example of the role table 120. In the role table 120, there is registered every role the range of individual names and articles which the individuals charge or the names of individuals who manage the articles.

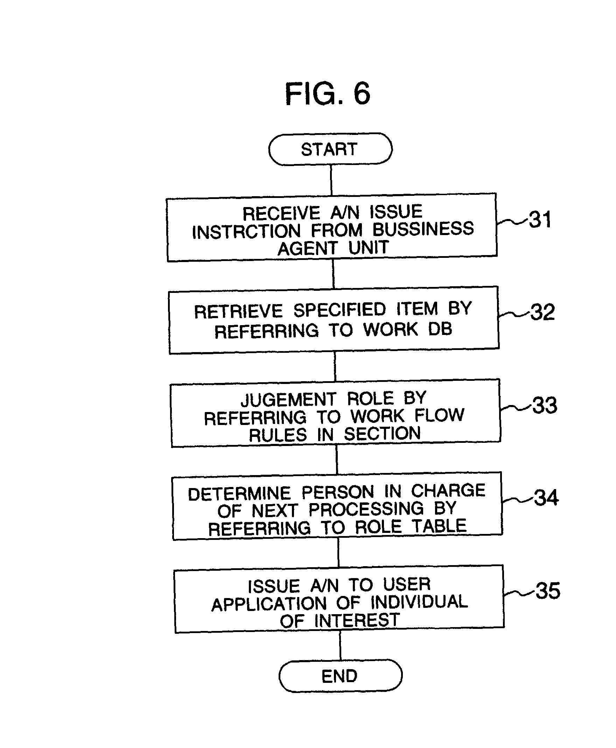

Fig. 6 is a flow chart showing the processing flow in the role agent unit 122, and more particularly shows the flow of the processing wherein the role agent unit 122 issues, in response to an A/N issue instruction issued from the business agent unit 123, and an A/N to the corresponding user application 111. The role agent unit 122 receives the A/N issue instruction from the business agent unit 123 (Step 31). This A/N issue instruction includes the item number 20. The role agent unit 122 retrieves the data relating to the item having the specified item number by referring to the work DB 112 (Step 32), judges the next role in accordance with the item state 24 by referring to the work flow rules 119 in a section (refer to Fig. 4)(Step 33), and determines the individual name of the person in charge of the next processing who is fitted for the conditions of the item of interest by referring to the role table 120 (Step 34). Then, the role agent unit 122 issues an A/N to the user application of the person in charge of the next processing (Step 35). In this connection, it is assumed that the persons in charge of the processings and the user application 111 are made correspond to one another on the basis of a table (not shown).

When the role agent unit 122 in a certain section receives an A/N issue instruction from the business agent unit 123 which manages that section, the item is in the state of starting the processing in that section. For example, this state is the state wherein as shown in Fig. 3, only the data relating to the names of articles 25 and the ordering amount 26 is inputted in addition to the item number 20.

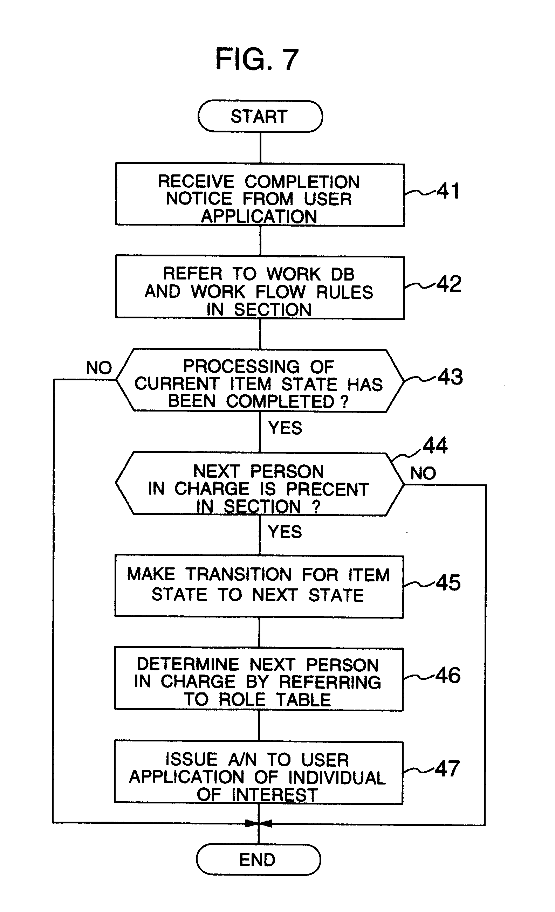

Fig. 7 is a flow chart showing the processing flow in the role agent unit 122, and more particularly shows the flow of the processing wherein in response to the notice indicating completion of the processing from a certain user application 111 in the related section, the role agent unit 122 issues an A/N to another user application 111 in the same section.

When a certain user application 111 has completed the processing for the item of interest and completes writing of the data to the work DB 112, the certain user application 111 informs the role agent unit 122 of this effect, and then the role agent unit 122 receives a notice indicating this completion (Step 41). The notice indicating this completion includes the item number 20. The role agent unit 122 retrieves the item of the specified item number by referring to the work DB 112, and then refers to the work flow rules 119 in a section corresponding to the item of interest (Step 42). If the data input state of the item of interest does not fulfill the data input state of the work flow rules 119 in s section (e.g., in such a case of rejection of the decision), and it is judged that the processing for the current item state has not yet been completed (Step 43 NO), then the processing is completed. On the other hand, if it is judged that the processing for the current item state has already been completed (Step 43 YES), then it is judged whether or not the person in charge of the processing for the next item state is defined in the work flow rules in a section (Step 44). If it is judged that the next person is absent in the section of interest (Step 44 NO), then the processing is completed. On the other hand, if it is judged that the next person is present in the section of interest (Step 44 YES), then the item state 24 is updated to the next state (Step 45). Next, by referring to the role table 120, the person corresponding to the role of the next item state is determined (Step 46), and then an A/N is issued to the user application of the person of interest (Step 47).

In the case where both of the user application 111 and the role agent unit 122 can not access directly to the work DB 112, the role agent unit 122 receives, in addition to an A/N issue instruction from the business agent unit 123, the data relating to the name of the local file in which the data which is wanted to be accessed thereto has been read out to be stored. Therefore, in Step 32, the role agent unit 122 retrieves the data relating to the specified item from the local file, and thereafter executes the processings in Steps 33, 34 and 35 in a manner as described above. In this connection, the initial state as the item state when starting the processing of the item in the section is set to the item state 24 of the new item. Then, the rule agent unit 122 transmits an A/N to which the received data relating to the name of the local file is added to the determined user application 111. In addition, when having received the notice indicating completion of processing and having the name of the local file from the user application 111, the role agent unit 122 retrieves the specified item from the specified local file step 42 to execute the processings in Steps 42 to 47 in a manner as described above. In Step 47, an A/N in which the name of the local file is specified is issued to the user application 111 of the determined person in charge of the next processing.

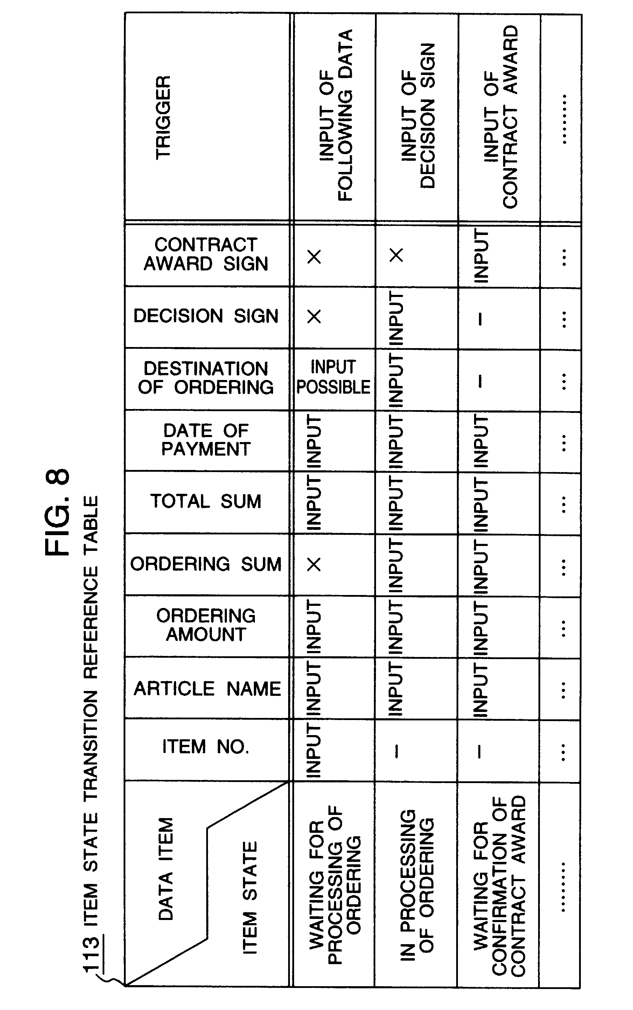

Fig. 8 is a view showing a data example of the item state transition reference table 113. The item state transition reference table 113 is the table in which the conditions are defined on which the transition is made for the item state, and more particularly in which the conditions of the item state and the state transition are defined which have one turning point at which the action is made either from a certain section to another section or from a certain section to another enterprise. In this example, "input" exhibits the data item to which the data is inputted in the item state of interest, and as long as the data can not be decided, it is possible to correct the data of interest in the later item state. In addition, the mark "x" exhibits the item to which no data can be inputted in the item state of interest. "Input possible" exhibits the data item to which the data can be inputted in the item state of interest, but the data may be inputted in the later item state. That is, if the data is yet uninputted to only the item of "input possible" and the data has already been inputted to other items of "input", then the transition can be made to the next item state. If seeing it from a different angle, we may also consider that the default value is inputted to the item of "input possible". The mark "-" exhibits the data item in which the data has already been decided in the previous item state. For example, as shown in the item of "trigger", if the data relating to the item number, the names of articles, the ordering amount and the date of payment is inputted in the item state of "waiting for processing of ordering", then the transition is made to the next item state. In addition, if the decision sign is inputted in the item state of "in processing of ordering", then the transition is made to the next item state. In addition, if the contract award sign is inputted in the item state of "waiting for confirmation of ordering", then all of the data items are decided, and then the transition is made to the next item state.

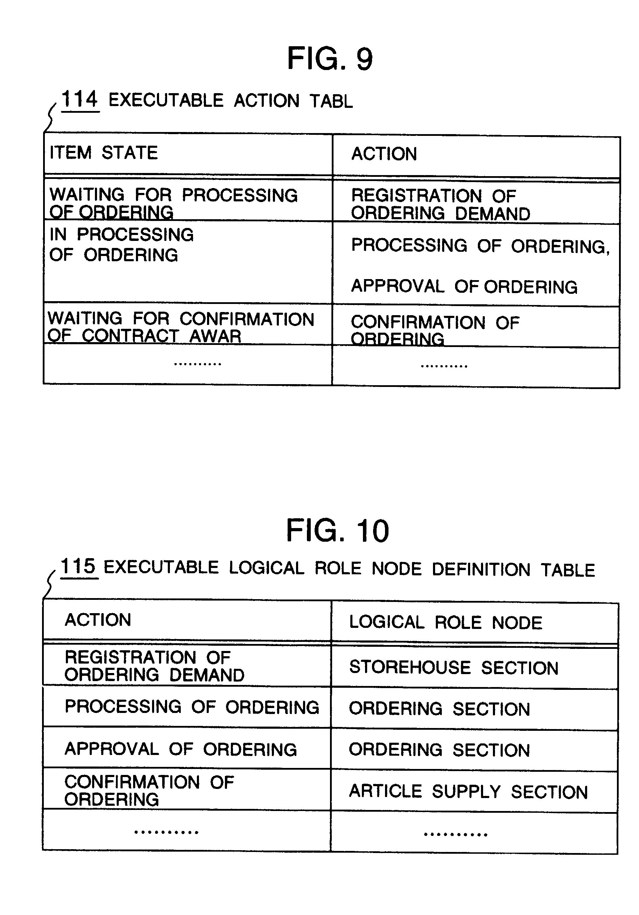

Fig. 9 is a view showing a data example of the executable action table 114. The executable action table 114 is the table in which the executable action is defined when the item state of interest becomes the item state defined by the item state transition reference table 113.

Fig. 10 is a view showing a data example of the logical role node definition table 115. The logical role node definition table 115 is the table in which the logical role node for executing the action is defined. While in the logical role node, the name of the section is represented by a general term, the section which is handled here means the functional section and hence in general does not match the physical node such as a business or an enterprise, e.g., the section X 101, the section Y 102 or the company B 104.

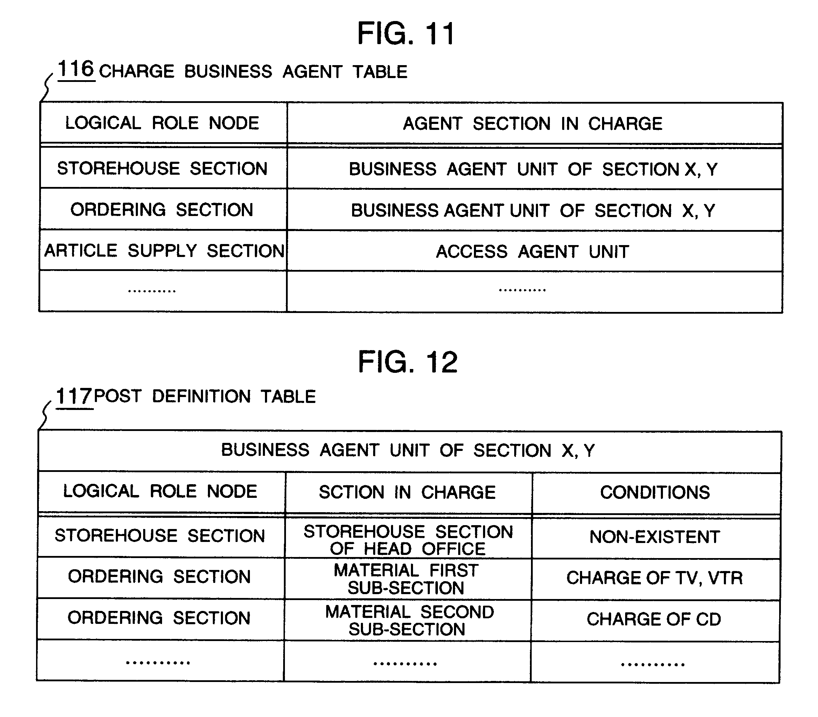

Fig. 11 is a view showing a data example of the charge business agent table 116. The charge business agent table 116 is the table in which the agent in charge is defined in correspondence to the logical role node defined by the logical role node definition table 115. In the item of the agent in charge, either the business agent unit 123 or the access agent unit 127 is defined, every logical role node, which manages the associated logical role node. The access agent unit 127 takes change of each section which belongs to the company of interest, but is out of the management of the business agent unit 123, or each section belonging to another company.

Fig. 12 is a view showing a data example of the post definition table 117. The post definition table 117 is the table in which the identifier of the actual section in charge and the conditions used to select this section in charge are defined in correspondence to the identifier of the logical role node (functional section) which the business agent unit 123 of interest manages. In this connection, it is assumed that the conditions for selection can be judged on the basis of the contents of the item data. In addition, since the section in charge is under the management of any one of the role agent units 122, when adding the identifier of the role agent unit 122 related to the section in charge (or the identifier of the server in which the role agent unit 122 is located), by referring to the post definition table 117, the objective role agent unit 122 and the name of the section under the management thereof can be specified.

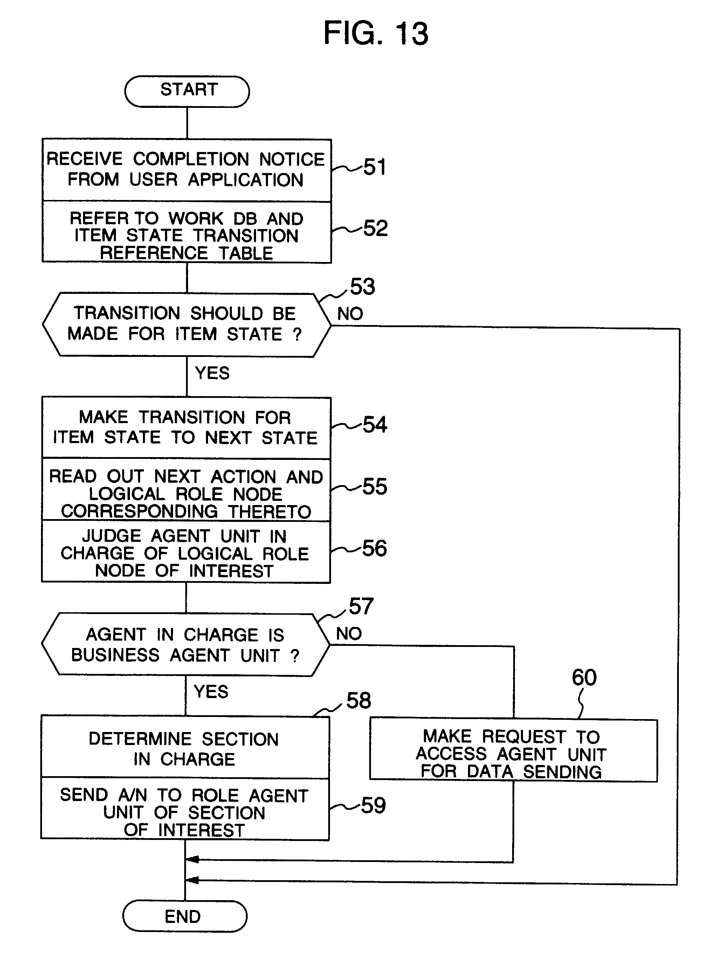

Fig. 13 is a flow chart showing the processing flow in the business agent unit 123, and more particularly shows the flow of the processing in which in response to the notice indicating completion of processing from the user application 111, the business agent unit 123 issues an A/N to another section. When having received the notice indicating completion of processing and including the item number 20 from the user application 111 (Step 51), the business agent unit 123 retrieves the data relating to the item having the specified item number by referring to the work DB 112, and then refers to the item state transition reference table 113 corresponding to the item of interest (Step 52). Then, the data input conditions of the item state on the item state transition reference table 113 corresponding to the current item state 24 are compared with each other, and then it is judged whether or not the transition should be made for the item state (Step 53). If it is judged that the conditions of transition of the item state are not fulfilled (Step 53 NO), then the processing is completed. On the other hand, if it is judged that the conditions of transition of the item state are fulfilled (Step 53 YES), then the item state 24 is updated to the next state (Step 54).

Next, the executable action table 114 (refer to Fig. 9) corresponding to those conditions is referred to read out the executable table action, and also the logical role node definition table 115 (refer to Fig. 10) is referred to read out the logical role node which will execute the processing next time (Step 55). Next, the charge business agent table 116 (refer to Fig. 11) is referred to judge the agent unit in charge of the logical role node which will execute the processing next time (Step 56). If it is judged that the agent unit in charge is the business agent unit 123 (Step 57 YES), the post definition table 117 (Fig. 12) is referred to determine the actual section in charge (Step 58). In the case where the section in charge has the conditions, the item data is referred to determine the section in charge fulfilling the conditions. Next, an A/N is sent to the role agent unit 122 of the section thus determined (Step 59). On the other hand, if it is judged that the agent unit in charge is not the business agent unit 123 (Step 57 NO), then a request is made to the access agent unit 127 for the data sending (Step 60). This data sending request includes the data relating to the item number 20, and the logical role node of the section or the enterprise to which the data is to be sent.

As described above, the user application 111 sends a notice indicating completion of the processing to both of the role agent unit 122 and the business agent unit 123 in order to control the work flow sequence between sections as well as the work flow sequence in a section. In this connection, even if the sequence of the work processing is not necessarily carried out in series, and the processing in a certain section is not completed, there is the possibility that, the work processing in another section can be started precedingly. For example, in the case of the work flow sequence shown in Fig. 4, with respect to the articles the ordering amount of which is equal to or higher than one million yen, if there is no sign of the section chief level, then the processing in a section is not completed. However, with respect to other articles, for example, if there is the decision sign of the chief level, then the processing will be completed. In such a way, it is possible that the portion which has been completed with the processing in a sector is precedingly taken over by another section in order to carry out the associated processing.

When both of the user application 111 and the business agent unit 123 can not access to the work DB 112, the business agent unit 123 receives both of the item number 20 and the name of the local file storing therein the item of interest from the user application 111. Next, the business agent unit 123 retrieves the specified item from the specified local file, and compares the data input conditions of the item state on the item state transition reference table 113 corresponding to the current item state 24 with each other to judge whether or not the transition should be made for the item state. If it is judged that the transition should not be made for the item state, then the processing will be completed. On the other hand, if it is judged that the transition should be made for the item state, then the business agent unit 123 refers to the logical role node definition table 115 to read out both of the logical role node which will execute the processing next time and the logical role node which has completed the processing and then executes the processings in Steps 56 and 57. If it is judged that the agent unit in charge is the business agent unit 123, then the processing in Step 58 is executed to sent an A/N to which the name of the local file of interest is added to the role agent unit 122 of the determined section. On the other hand, if it is judged that the agent unit in charge is not the business agent unit 123, then a request is made to the access agent unit 127 for the data sending, the logical role node which has completed the processing, the data item name included in the item of interest and the instance value thereof, and the item state 24 to which the transition is to be made.

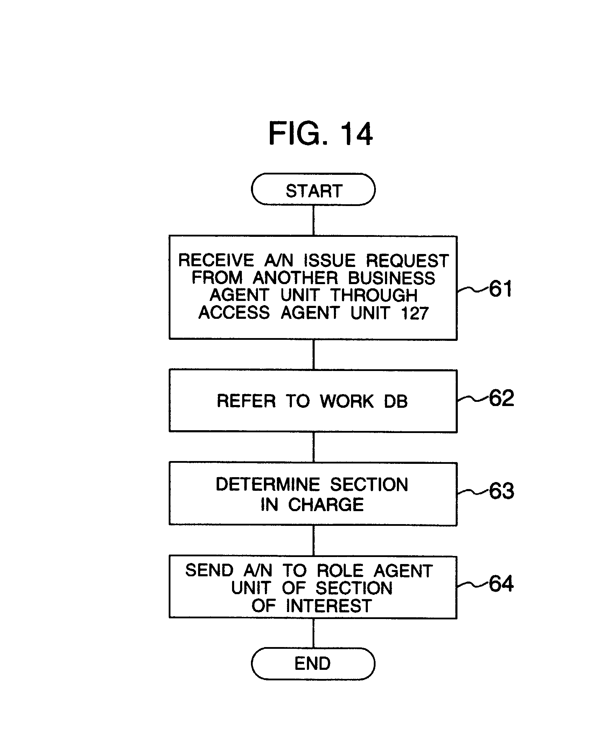

Fig. 14 is a flow chart showing the processing flow in the business agent unit 123, and more particularly shows the processing in which in response to an A/N issue request from another business agent unit 123, the business agent unit 123 issues an A/N to the corresponding section. The business agent unit 123 receives an A/N issue request from another business agent unit 123 through both of the access agent unit 127 and the network switching unit 128 (Step 61). This A/N issue request includes the item number 20 and the logical role node of the section or the enterprise to which the data is to be sent. Next, the business agent unit 123 refers to the work DB 112 to retrieve the data relating to the item of the specified item number (Step 62), and refers to the post definition table 117 to determine the actual section in charge corresponding to the logical role node (Step 63). When the section in charge has the conditions, the business agent unit 123 refers to the item data to determine the section in charge fulfilling the conditions. Finally, the business agent unit 123 sends an A/N to the role agent unit 122 which manages the section thus determined (Step 64). This A/N includes the item number 20 of the item.

When both of the user application 111 and the business agent unit 123 can not access to the work DB 112, the business agent unit 123 receives, in addition to the data relating to the item number 20 and the logical role node of the section or the enterprise to which the data is to be sent, the data relating to the name of the data item and the instance value thereof from another business agent unit 123. If the item having a specified item number is the new item, then the business agent unit 123 adds the item data having this item number onto the local file. If the item of interest is the item which has already been registered in the local file, then the business agent unit 123 updates the item data in the file on the basis of the received data. Next, in a manner as described above, the business agent unit 123 executes the processings in Steps 63 and 64. Then, the business agent unit 123 sends an A/N to which the data relating to the name of the local file is added to the role agent unit 122 in the determined section.

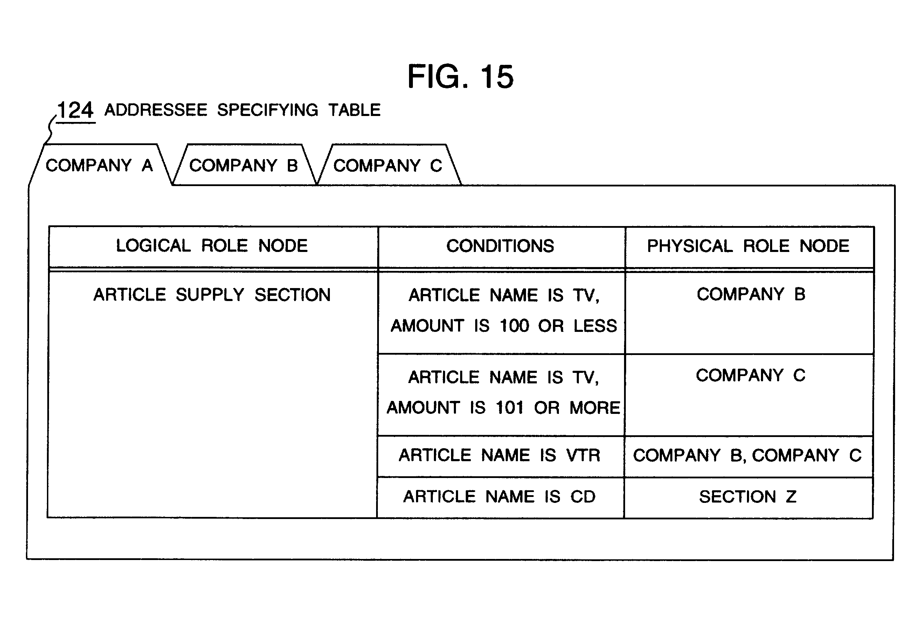

Fig. 15 is a view showing a data example of the addressee specifying table 124. The addressee specifying table 124 is the table in which the physical role node corresponding to the logical role node and the conditions used to select the physical role node of interest are defined. The destination of the physical role node corresponds to the server (host) in which the business agent unit 123 managing the physical role node of interest is located. For this reason, the identifier relating to the business agent unit 123 of interest or the identifier of the server of interest may also be defined. In this connection, it is assumed that the conditions for selecting the physical role node may be judged on the basis of the contents of the item data.

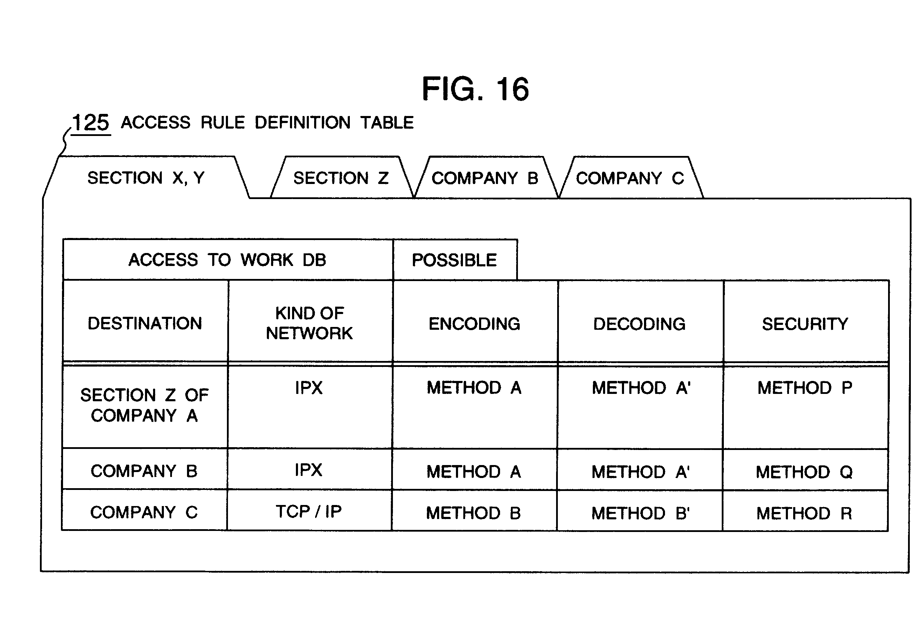

Fig. 16 is a view showing a data example of the access rule storing table 125. The access rule storing table 125 is the table in which whether or not an access can be made to the work DB 112 is set every physical role node, and the kind of network, the encoding decoding method and the security method are set in correspondence to the physical role node of the destination. The kind of network is the kind of physical network, the communication protocol or the like. The encoding decoding method sets the data compression restoration method, and the security method sets the encipherment method. But, if the encipherment is unnecessary due to the kind of network and the physical role node of the destination, then this effect is set therein.

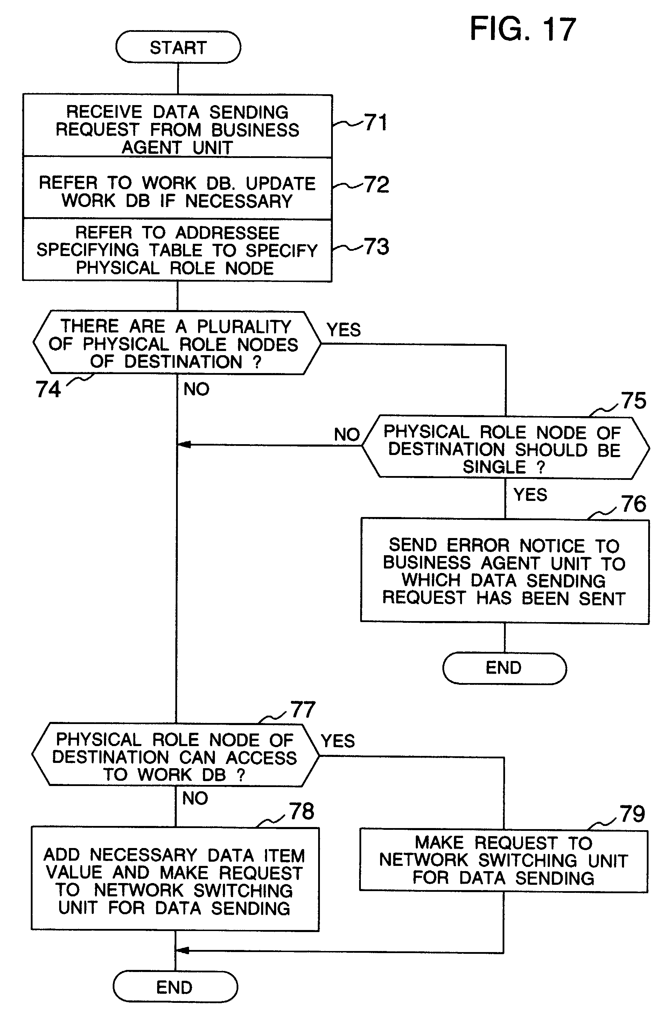

Fig. 17 is a flow chart showing the processing flow in the access agent unit 127. The access agent unit 127 receives a data sending request from the business agent unit 123 (Step 71). This data sending request includes the item number 20 and the logical role node of the section or the enterprise to which the data is to be sent. In addition, when the logical role node of the section or the enterprise to which the data is to be sent is the section which can not access to the work DB 112, the data sending request further includes the data item name and the instance value thereof with respect to the item of interest, and the values related to the logical role node which has completed the processing and the item state 24 for which the transition should be made next time. The access agent unit 127 retrieves the item of the specified item number by referring to the work DB 112, and then updates the work DB 112 on the basis of the received data item value (Step 72). But, this update is limited to the data item in which on the basis of reference to the work DB112, the logical role node of the unit from which the data is sent is "update possible" with respect to the current item state 24 of the item of interest. For this reason, if the data item name different therefrom is present, then such a data item name will be ignored. After completion of this update, the item state 24 of the item of interest is updated on the basis of the value of the received item state 24. Next, the addressee specifying table 124 is referred to specify the physical role node of the destination corresponding to the logical role node of the section or the enterprise to which the data is to be sent (Step 73). When the addressee has the conditions, the item data is referred to select the addressee fulfilling the conditions.

Next, it is judged whether or not there are a plurality of physical role nodes of the destination (Step 74). If it is judged that there is a single physical role node of the destination (Step 74 NO), then the processing proceeds to Step 77. On the other hand, if it is judged that there are a plurality of physical role node of the destination (Step 74 YES), then it is further judged whether or not the physical role node of the destination should be single depending on the kind of item (Step 75). If it is judged that there may be a plurality of physical role nodes of the destination (Step 75 NO), then the processing proceeds to Step 77. On the other hand, if it is judged that the number of physical role node of the destination is only one (Step 75 YES), then the access agent unit 127 sends an error notice to the business agent unit 123 from which the data sending request has been sent (Step 76).

This error notice requests the user application 111 to send an A/N with which a single data sending addressee will be specified. For example, in the example of the addressee specifying table 124 shown in Fig. 15, since under the conditions in which the name of article is VTR, both of the company B and the company C are selected as the physical role nodes, if the item is the article ordering, then it is judged to be an error. However, if the item is the estimation request, since a plurality of data addresses may be available, the judgement of the error will not be made. The kind of item is judged on the basis of the item number 20 or the data item name (attribute name) which the item has.

In Step 77, the access agent unit 127 refers, with respect to the physical role node as the destination, to the access role storing table 125 to judge whether or not the physical role node as the destination can access to the objective work DB 112 (Step 77). If it is judged that the section or the enterprise to which the data is to be sent can not access to the work DB 112 (Step 77 NO), then the access agent unit 127 refers to the work DB 112 and then adds the names of the data items in which the logical role node of the section or the enterprise to which the data is to be sent is "reference possible" and "update possible" with respect to the current item state 24 of the item of interest, and the instance values thereof to make a request to the network switching unit 128 for the data sending (Step 78). On the other hand, if it is judged that the addressee of the data can access to the work DB 112 (Step 77 YES), then the access agent unit 127 makes a request to the network switching unit 128 for the data sending (Step 79). Each of those data switching requests includes the data relating to the item number 20 of the item, and the logical role and the physical role node of the destination.

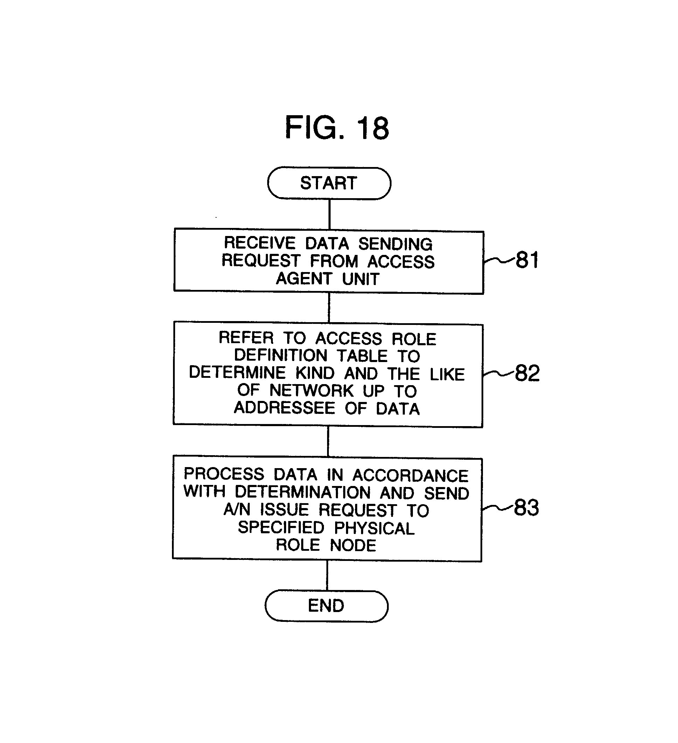

Fig. 18 is a flow chart showing the processing flow in the network switching unit 128. The network switching unit 128 receives the data sending request made from the access agent unit 127 (Step 81), and then refers to the access role storing table 125 to determine the kind and the like of the network up to the section or the enterprise to which the data is to be sent (Step 82). Then, the network switching unit 128 processes the data which has been sent thereto in accordance with that determination and then sends an A/D issue request to the business agent unit 123 of the specified physical role node (Step 83).

In this connection, while being against the principles of the present invention, the section or the enterprise to which the data is to be sent is not determined by the agent unit in such a manner, but the person in charge of the work step of interest may also specify the section or the enterprise to which the data is to be sent through the user application 111. For example, the case corresponds thereto where when carrying out ordering and the estimation processing of the name of article, VTR, shown in Fig. 15, the person in charge of the work step of interest may specify only the company B as the company to which the request was made, and the like. In this case, the judgement made by the person in charge of the work step of interest takes priority over the judgement made by the access agent unit 127. Next, the description will hereinbelow be given with respect to the process flow in the case where the person in charge of the work step of interest specifies the section or the enterprise to which the data is to be sent.

First of all, the person in charge of the work step of interest carries out the work processing following the instruction from the user application 111, and when having completed the processing, issues the notice indicating completion of the processing to both of the role agent unit 122 and the business agent unit 123. At this time, the section or the enterprise to which the data is to be sent is specified. In response to the completion notice issued thereto, the role agent unit 122 controls the work flow in a section in a manner as described above. In addition, in response to the notice issued thereto from the user application 111, the business agent unit 123 judges whether or not the transition has been made for the item state. If it is judged that the transition has been made for the item state, then the business agent unit 123 determines the logical role node to which the addressee of the data specified by a table (not shown) belongs. Next, the business agent unit 123 refers to the charge business agent table 116 to judge which business agent has jurisdiction over the logical role node of interest.

If it is judged that the business agent of interest is the business agent unit 123, then the business agent unit 123 issues an A/N to the role agent unit 122 which has jurisdiction over the section or the enterprise to which the data is to be sent. On the other hand, if it is judged that the business agent of interest is that belonging to another section or another company, then the business agent unit 123 makes a request to the access agent unit 127 for the data sending. Now, the access agent unit 127 gives, instead of referring to the addressee specifying table 124 (Fig. 15) to specify the physical addressee of the data corresponding to the logical role node, the addressee of the data specified by the user application 111 preference, and then regards this addressee of the data as the physical role node of the destination. Thereafter, in a manner as described above, it is judged whether or not the logical role node to which the addressee of the data belongs can access to the work DB 112, and a request is made to the network switching unit 128 for the data sending with the data item name of the item on the work DB 112 and the instance value added thereto if necessary. Then, the network switching unit 128 processes the data and sends the data to the specified section or enterprise to which the data is to be sent.

In addition, some enterprises each having no business agent unit 123 provided therein may be present in a plurality of enterprises constituting the system for the dealings between enterprises. While such enterprises can not carry out the work flow control extending over enterprises as described above, they can receive, from another enterprise, the item data specifying the section or the enterprise to which the data is to be sent and the section or the enterprise from which the data has been sent through the access agent unit 127, and also can send an answer data to the enterprise from which the data has been transmitted through the access agent unit 127.

Incidentally, while in the embodiment shown in Fig. 2, the access agent unit 127, the access rule definition database 126 and the network switching unit 128 are included in the provider 106 so as to be independent of the computer system of the company A, it is also possible to realize those units in the computer system which an enterprise such as the company A has.

While the present invention has been particularly shown and described with reference to the preferred embodiments and the specified modifications thereof, it will be understood that the various changes and other modifications will occur to those skilled in the art without departing from the scope and true spirit of the invention. The scope of the invention is therefore to be determined solely by the appended claims.

## Claims

1. A method of controlling work flow by utilizing an electronic computer, comprising the steps of:
judging, when detecting completion of a work step relating to item data in a work processing, whether or not the person in charge of a next processing is in a state of an item to be processed on the basis of work flow rules (119) in a section used to define the person in charge of an item to be processed next time in a work flow sequence within a section in accordance with a data input state of the item data of interest, and issuing, if the person in charge of the next processing has reached the state of the item to be processed, an action notice to the person in charge of the next processing.

2. A work flow control method according to claim 1, further comprising the steps of:
judging, when detecting completion of the work processing relating to the item data of interest, whether or not the next section is in a state of an item to be processed on the basis of work flow rules (113) between sections used to define the section in charge of the processing to be processed next time in a work flow sequence extending over the sections in accordance with the data input state of the item data of interest, and issuing, if the next section has reached the state of the item to be processed, an action notice to the next section; and
carrying out, in response to the action notice issued to the next section, the next work step on the basis of the work role rules in a section.

3. A work flow control method according to claim 2, wherein the next section of interest is the functional section represented by a general term, and a table for storing therein data relating to the correspondence between an identifier of the functional section of interest and an identifier of a section which is actually present is referred to convert the identifier of the next section of interest into the identifier of the actual section and then an action notice is issued to the next section of interest.

4. A work flow control method according to claim 3, wherein the table is the table in which the actual section corresponding to the functional section of interest is set in accordance with the contents of the item data of interest, and the contents of the item data of interest are compared with the contents of the item data in the table of interest to determine the actual section.

5. A work flow control method according to claim 2, wherein the item data of interest is the data which is stored in a work database, and if the next section of interest can not access to the work database, then a data item name contained in the item data and an instance value thereof are sent together with the action notice to the next section.

6. A computer system for carrying out work flow control by utilizing an electronic computer, said system including a first agent unit (122) for controlling work flow in a section, wherein
said first agent unit includes a unit for judging, when detecting completion of a work step relating to item data in a work processing, whether or not the person in charge of a next processing is in a state of an item to be processed on the basis of work flow rules (119) in a section used to define the person in charge of an item to be processed next time in a work flow sequence within a section in accordance with a data input state of the item data of interest, and for issuing, if the person in charge of the next processing has reached the state of the item to be processed, an action notice to the person in charge of the next processing; and a unit for carrying out, in response to the action notice issued to a next section, the work flow control in a section on the basis of the work flow rules in a section.

7. A computer system according to claim 6, wherein said computer system further includes a second agent unit (123) for controlling work flow between sections, and a third agent unit (127) for carrying out data transfer between said second agent unit and another second agent unit,
said second agent unit includes a unit for judging, when detecting completion of the work step relating to the item data in the work processing, whether or not the next section is in a state of an item to be processed on the basis of the work flow rules (113) between sections used to define the section in charge of the processing to be processed next time in the work flow sequence extending over sections in accordance with the data input state of the item data of interest and for judging, when the next section has reached the state of the item to be processed, whether the next section belongs to the section under the management made by the second agent unit of interest or the section out of the management thereof, and for issuing, if the next section is judged to belong to the section under the management thereof, an action notice to said first agent unit under the management, while making, if the next section is judged to belong to the section out of the management thereof, a request to said third agent unit for the data sending; and a unit for issuing, in response to an action notice issued from said third agent unit, an action notice to said first agent unit as the destination, and
said third agent unit includes a unit for determining, in response to the request thereto for the data sending from the second agent unit, said second agent unit for managing the next section, and for issuing an action notice to said second agent unit thus determined.

8. A computer system for controlling work flow according to claim 7, wherein the next section is the functional section which is represented by a general term, and said third agent unit has a unit for referring to a third table in which the data relating to the correspondence between an identifier of the functional section and an identifier relating to said second agent unit is stored to convert an identifier of the next section which has been received from said second agent unit into an identifier relating to another second agent unit, and then to send an action notice to the another second agent unit; and the another second agent unit has a unit for referring to a second table in which the data relating to the correspondence between the identifier of the functional section and an identifier relating to said first agent unit to convert an identifier of the next section which has been received from said third agent unit into the identifier relating to the first agent unit under the management of the another second agent unit and then to issue an action notice to the first agent unit as the destination.

9. A computer system for controlling work flow according to claim 8, wherein said third table is the table in which an identifier of the second agent unit corresponding to the functional section is set in accordance with the contents of the item data; said second table is the table in which an identifier of said first agent unit corresponding to the functional section is set in accordance with the contents of the item data; said third agent unit has a unit for comparing the contents of the item data with the contents of the item data of said third table to determine the second agent unit as a unit to which an action notice is sent; and said second agent unit has a unit for comparing the contents of the item data with the contents of the item data of said second table to determine the first agent unit as a unit to which an action notice is issued.

10. A computer system for controlling work flow according to claim 7, wherein the item data is the data which is stored in a work database, and said third agent unit has a unit for sending, when the next section can not access to the work database, the data relating to a data item name contained in the item data and an instance value thereof together with the action notice to the next section.

11. A computer program which is substantiated on a computer-readable storage medium, said program being a program which is executed in a computer system for carrying out work flow control by utilizing a computer, said computer system having a first agent unit (122) for controlling the work flow in a section,
wherein said first agent unit includes a processing unit for judging, when detecting completion of a work step relating to item data in a work processing, whether or not the person in charge of a next processing is in a state of an item to be processed on the basis of work flow rules (119) in a section used to define the person in charge of an item to be processed next time in a work flow sequence within a section in accordance with a data input state of the item data of interest and for issuing, if the person in charge of the next processing has reached the state of the item to be processed, an action notice to the person in charge of the next processing.

12. A computer program according to claim 11, wherein said computer system further has a second agent unit (123) for controlling the work flow between sections; and a third agent unit (127) for transferring data between the second agent unit and another second agent unit,
said first agent unit further includes a processing unit for carrying out, in response to an action notice to a next section, the work flow control in a section on the basis of the work flow rules in a section,
said third agent unit includes a processing unit for determining, in response to the request made thereto for the data sending from said second agent unit, the second agent unit for managing the next section, and for sending an action notice to the second agent unit thus determined, said program for executing the processing of the second agent unit comprising the steps of:
(a) judging, when detecting completion of a work step relating to the item data, whether or not a next section is in a state of an item to be processed on work flow rules (113) between sections used to define a section in charge of an item to be processed next time in a work flow sequence extending over sections in accordance with a data input state of the item data;
(b) judging, when the next section has reached the state of the item to be processed, whether the next section belongs to a section under the management made by said second agent unit or a section out of the management thereof to issue, when the next section belongs to a section under the management thereof, an action notice to said first agent unit under the management, and also to make, when the next section belongs to a section out of the management thereof, a request to said third agent unit for data sending; and
(c) issuing, in response to an action notice from said third agent unit, an action notice to said first agent unit as the destination.

13. A computer program which is substantiated on a computer-readable storage medium, said program being a program which is executed in a computer system for carrying out work flow control by utilizing a computer, said computer system having: a first agent unit (122) for controlling the work flow in a section,
said first agent unit includes a unit for judging, when detecting completion of a work step relating to item data in a work processing, whether or not the person in charge of a next processing is in a state of an item to be processed on the basis of work flow rules (119) in a section used to define the person in charge of an item to be processed next time in a work flow sequence within a section in accordance with a data input state of the item data of interest and for issuing, if the person in charge of the next processing has reached the state of the item to be processed, an action notice to the person in charge of the next processing.

14. A computer program according to claim 13, wherein said computer system further includes a second agent unit (123) for controlling the work flow between sections; and a third agent unit (127) for transferring data between the second agent unit and another second agent unit,
said first agent unit further includes a unit for carrying out, in response to an action notice to a next section, the work flow control in a section on the basis of the work flow rules in a section,
said second agent unit includes a unit for judging, when detecting completion of the work step relating to the item data, whether or not a next section is in a state of an item to be processed on the basis of work flow rules (113) between sections used to define a section in charge of an item to be processed next time in a work flow sequence extending over sections in accordance with the data input state of the item data of interest and for judging, if the next section has reached the state of the item to be processed, whether the next section belongs to the section under the management made by said second agent unit or the section out of the management thereof to issue, if it is judged that the next section belongs to the section under the management thereof, an action notice to said first agent unit under the management, and to make, if it is judged that the next section belongs to the section out of the management thereof, a request to said third agent unit for data sending, and a unit for receiving an action notice issued from said third agent unit to issue an action notice to said first agent unit as the destination, said program for executing the processing of said third agent unit, comprising the steps of:
(a) receiving a data sending request from said second agent unit to determine the second agent unit for managing the next section; and
(b) sending an action notice to the second agent unit thus determined.

15. A work flow control method according to claim 1, wherein a plurality of sections (sections X and Y; companies B and C) for executing a work processing used to control the work flow.are determined and a first agent unit (122) is provided in each of said sections;
a plurality of work states (Figs. 3 and 8) are determined for which transition is made in proportion to as the work processing is executed, and the first agent unit for managing data input is determined for each of the work states;
work flow rules (119, 113) are provided in which the work states are made correspond to the input states of data in a database relating to the work processing;
when inputting data, the work flow rules are referred by at least said first agent unit;
as a result of the reference made thereto, for the work state (119) in which the section in charge of the data input is changed from a certain section to another section, the work state is continued to be executed by the first agent unit related to the former section.

16. A work flow control method according to claim 15, wherein said plurality of sections are assigned to a plurality of section blocks (companies A, B and C) in such a way that each of said plurality of section blocks includes at least one section, and a second agent unit (123) is provided in each of said section blocks,
when as a result of the reference made thereto, the section in charge of the data input is changed in the work state (113) from a certain section to another section, in the case where the latter section belongs to the same section block as that of the former section, the second agent unit related to the same section block issues an action notice to the first agent unit related to the latter section to instruct the first agent unit related thereto to execute the work state, and in other cases, the second agent unit related to the former section sends a notice to the second agent unit related to the latter section so that the second agent unit related to the latter section issues an action notice to the first agent unit related to the latter section to instruct the first agent unit related thereto to execute the work state.

17. A work flow control system comprising:
a plurality of sections (sections X and Y; companies B and C) each for executing a work processing which is to be subjected to the work flow control;
a first agent unit (122) provided in each of said sections, a plurality of work states (Figs. 3 and 8) for which transition is made in proportion to as the work processing is executed being determined, the first agent unit for managing the data input being determined for each of the work states;
a database for storing therein data relating to the work processing; and
work flow rules (119, 113) in which the work states are made correspond to the input states of data in said database,
wherein when inputting data, at least said first agent unit refers to the work flow rules,
as a result of the reference made thereto, for the work state (119) in which the section in charge of the data input is changed from a certain section to another section, the first agent unit related to the former section continues to execute the work state.

18. A work flow control system according to claim 17, wherein a second agent unit (123) provided in each of a plurality of section blocks (companies A, B and C), said plurality of sections being assigned to said plurality of section blocks in such a way that each of said plurality of section blocks include at least one section,
when as a result of the reference made thereto, the section in charge of the data input is changed in the work state (113) from a certain section to another section, in the case where the latter section belongs to the same section block as that of the former section, the second agent unit related to the same section block issues an action notice to the first agent unit related to the latter section to instruct the first agent unit related thereto to execute the work state, and in other cases, the second agent unit related to the former section sends a notice to the second agent unit related to the latter section so that the second agent unit related to the latter section issues an action notice to the first agent unit related to the latter section to instruct the first agent unit related thereto to execute the work state.
